(19) Europäisches Patentamt
European Patent Office
Office européen des brevets

(11) EP 4 704 334 A1

(12) EUROPEAN PATENT APPLICATION

(43) Date of publication:
04.03.2026 Bulletin 2026/10

(51) International Patent Classification (IPC):
H02S 50/00 (2014.01)

(21) Application number: 24197351.0

(22) Date of filing: 29.08.2024

(52) Cooperative Patent Classification (CPC):
H02S 50/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Siemens Schweiz AG
8047 Zürich (CH)

(72) Inventors:
• Noor, Moinuddin
  1100 Wien (AT)
• Engelbrecht, Gerhard
  1050 Wien (AT)
• Valerio, Danilo
  1230 Wien (AT)

(74) Representative: Siemens Patent Attorneys
Postfach 22 16 34
80506 München (DE)

(54) **METHOD OF CALCULATING EFFICIENCY DEGRADATION OF ENERGY CONVERSION DEVICE**

(57) The invention relates to a computer-implemented method (100) for calculating an efficiency degradation rate of an energy conversion device (50) from measurement data (10) of the energy conversion device (50). The method comprises the steps of: a) providing first measurement data (14) of a first observation obtained at a first time point, the first measurement data including multiple measurement data points each relating an energy input value of the energy conversion device (50) to an energy output value of the energy conversion device (50); b) applying a mathematical model to the first measurement data (14) to obtain a function modelling the first measurement data (14); c) determining (130) a first coefficient of conversion from the obtained function, wherein the first coefficient of conversion represents a ratio of the energy input to the energy output at the first time; d) repeating (140) steps a) to c) with second measurement data of the energy conversion device (50) obtained at a second time point, the second time point being different than the first time point, thereby obtaining a second coefficient of conversion representing a ratio of the energy input to the energy output at the second time point; e) comparing (150) the first coefficient of conversion with the second coefficient of conversion to determine the efficiency degradation rate of the energy conversion device (50).

FIG 5

**Description**

The present invention relates to the field of energy conversion devices.

Energy conversion devices are technical systems that transform energy from one form into another form, in particular from forms provided by nature to forms that can be used by humans, or vice versa. Examples of such devices are photovoltaic (PV) systems (which transform from solar energy to electrical energy), heat-pumps (which transform from electrical and thermal energy to heat), and wind turbines (which transform from kinetic energy to mechanical energy). The efficiency of an energy conversion device is a measure of how well the device transforms input energy into output energy. Efficiency is not constant over the entire lifespan of a device, typically due to degradation of materials. For this reason, the manufacturers typically indicate a lifespan along with the maximum efficiency degradation per year.

Monitoring the actual degradation that occurs after putting the device into operation is fundamental to verify if the device meets the specification and, more importantly, to ensure efficient operation over its entire lifespan. Efficiency studies of energy conversion devices are typically carried out in controlled environments at standard test conditions. In this regard, numerous methods and performance metrics have been developed, by using both, data-driven and analytical approaches.

In "Review of photovoltaic degradation rate methodologies," Renewable and Sustainable Energy Reviews, vol. 40, pp. 143-152, 2014, Phinikarides et al. provided a comprehensive overview of the various methodologies for measuring the degradation rate in PV systems as well as commonly used methods in terms of their relative performances.

Further, in "Quasi-dynamic model of the energy efficiency degradation coefficient for an air-to-water heat pump," E3S Web of Conferences, vol. 44, p. 00139, 2018, Piechurski et al. proposed a quasi-dynamic model for calculating the degradation coefficient of heat pumps, addressing air-to-water heat pumps.

However, available methods are specific to each type of energy conversion device and do not generalize. Therefore, it is an object of the present disclosure to provide a general method for efficiency monitoring.

Summary of the Invention

The present invention relates to a computer-implemented method for calculating an efficiency degradation rate of an energy conversion device from measurement data of the energy conversion device. The method comprises the steps of: a) providing first measurement data of a first observation obtained at a first time point, the first measurement data including multiple measurement data points each relating an energy input value of the energy conversion device to an energy output value of the energy conversion device; b) applying a mathematical model to the first measurement data to obtain a function modelling the first measurement data; c) determining a first coefficient of conversion from the obtained function, wherein the first coefficient of conversion represents a ratio of the energy input to the energy output at the first time; d) repeating steps a) to c) with second measurement data of the energy conversion device obtained at a second time point, the second time point being different than the first time point, thereby obtaining a second coefficient of conversion representing a ratio of the energy input to the energy output at the second time point; e) comparing the first coefficient of conversion with the second coefficient of conversion to determine the efficiency degradation rate of the energy conversion device.

The method according to the invention uses measurement data of the energy conversion device to calculate its efficiency degradation rate. In other words, the method determines how the capability of the energy conversion device to transform input energy into an intended form of output worsens over time. The measurement data that is used for this calculation merely needs to relate energy input values of the energy conversion device to energy output values of the energy conversion device, for example relate a first energy input value to a first energy output value and a second energy input value to a second energy output value. In more detail, considering a PV module as an example, the measurement data may relate power input values of solar irradiance in $W/m^2$ to power output values in kW. Based merely on this kind of measurement data the method of the invention allows for calculating, via a suitable mathematical model, a coefficient of conversion, or conversion coefficient, which represents a ratio of the energy input to the energy output at the first time. The coefficient of conversion may be understood as a parameter denoting the efficiency of the energy conversion. By analyzing measurement data at multiple time points, for example at annual intervals, multiple coefficients of conversion may be calculated over time. By comparing these coefficients of conversion, the change in efficiency of the energy conversion over time, or in other words the efficiency degradation rate, can be determined. Using measurement data that relates energy input to energy output and calculating the coefficient of conversion based on this measurement data is particularly simple and allows for the method to be used for basically any kind of energy conversion device. Known methods do not use such simple and general measurement data but require much more parameters to determine the efficiency degradation of the energy conversion device. Also, known method often require specific test environments which may lead to high complexity of the measurement procedure. For example, estimating degradation in a PV module requires sampling parameters such as the temperature of the module. Although such an estimation may be suitable for a certain test environment and an individual module, it is quite complex and costly, in particular for a PV-plant comprising multiple PV modules as this would require sampling the temperature of each individual PV module. The method of the invention provides for a more generalized approach for quantifying long-term degradation which may be applied to generally any kind of energy conversion device and is more time and resource efficient. Thus, the method according to the invention has an improved versatility and easy applicability compared to known methods. The method will be explained in more detail in the following.

Energy conversion means the conversion of energy from a first form of energy into a second form of energy, the second form being different from the first form. Thus, the energy conversion device is configured to transform energy from a first form of energy into a second form of energy. The energy conversion may refer to converting electrical energy into kinetic energy, for example linear or rotational movement or vice versa. Also, energy conversion may refer to converting environmental energy, like wind energy, solar energy, tides and/or thermal energy into electrical energy or vice versa. Every conversion of energy from one form into another form is inevitably subject to loss, in particular to unwanted conversion to heat energy. In other words, only part of the energy input into the energy conversion device is converted into the intended form of energy output. The efficiency of the energy conversion, and thus of the energy conversion device, in the present disclosure refers to the ratio between the energy input and the energy output and is represented by the coefficient of conversion. This efficiency degrades over time meaning that over the lifetime of the energy conversion device less of the input energy is converted into the intended energy output, the intended energy output meaning the kind of energy output the device was designed for (for example, electricity in case of a PV module). The rate at which this degradation occurs is, in the present disclosure, referred to as the efficiency degradation rate.

In a first step of the method of the invention, step a), first measurement data is provided. This means, for example, that a data processing apparatus performing the method reads this data.

The first measurement data is data which has been acquired by a first observation or, in other words, by a first measurement performed at the energy conversion device at a first time point, or instance in time. To acquire the first measurement data, a first energy input value is provided to the energy conversion device and first energy output value resulting from the first energy input value is measured which results in a first measurement data point. The measurement data may be data including actual energy values or other parameters which relate to energy values, i.e. which have the same relation. As an example, an energy input value may be 600 W (Watts), or W/m$^2$, and a corresponding energy out value may be 400 W. Thus, 600 W of input energy would relate to 400 W of output energy. Correspondingly, additional measurement data points are acquired, for example a second, third, etc. measurement data point. Thus, each measurement data point relates an energy input value of the energy conversion device to an energy output value of the energy conversion device. As explained above, merely measurement data relating energy input values to energy output values is required for the method according to the invention.

In a second step, step b), of the method a mathematical model is applied to the first measurement data. This results in a function modelling the first measurement data. In other words, a suitable function is fitted to the first measurement data. The mathematical model may be chosen based on the dependence of the energy input values to the energy output values. For example, if there is a linear dependence between the energy input values and the energy output values, a linear model may be suitable resulting in a linear function. The mathematical model fits or models the point cloud given by the multiple measurement data points of the first measurement data. The mathematical model may be applied, or fitted, to the first measurement data via a machine-learning modelling algorithm, in particular a machine-learning modelling algorithm that uses an independent feature to model a dependent feature.

In a third step, step c), a first coefficient of conversion is derived from the obtained function. The first coefficient of conversion represents a ratio of the energy input to the energy output at the first time. As mentioned above, the coefficient of conversion is a measure for the efficiency of the energy conversion. In other words, the mathematical function obtained fitting the first measurement data may provide the first coefficient of conversion. As the first measurement data relates input energy values to output energy values, the first coefficient of conversion provides such a relation as well, in this case for all the measurement points. For example, in case of a linear function, the coefficient of conversion may be the slope of the linear function.

In a fourth step, step d), the previously explained steps a) to c) are repeated for further measurement data obtained at different time points. In particular, at least one second measurement data of the energy conversion device obtained at a second time point, wherein the second time point is different, for example later, than the first time point. For example, the first measurement data may be acquired at time point X, which may e.g. represent a year, and the second measurement data may be acquired at time point X+1. Further measurement data may be acquired and analyzed via the method of the invention, in particular at time points X+n, wherein n = 0, 1, 2, .... A mathematical model is then applied to the second measurement data to obtain a function modelling the second measurement data, and a second coefficient of conversion is determined from the obtained function modelling the second measurement data. The second coefficient of conversion represents a ratio of the energy input to the energy output at the second time. Based on further measurement data, further coefficients of conversion may be acquired, for example a third coefficient of conversion, in particular an n-th coefficient of conversion, wherein n = 0,1, 2, .... The above explanations provided with respect to the first measurement data and first coefficient of conversion apply correspondingly. Thus, multiple coefficient of conversion are acquired, each representing the conversion efficiency of the energy conversion device at a different point in time. Determining multiple coefficients of conversion may increase the reliability of the obtained efficiency degradation rate of the energy conversion device.

In a fifth step, step e), the efficiency degradation rate of the energy conversion device is determined by comparing the first coefficient of conversion with the second coefficient of conversion. If more than two coefficients of conversions are determined, multiple or all of the coefficients of conversion may be compared to derive therefrom the efficiency degradation rate. Based on the change of the coefficient of conversion, the efficiency degradation rate is determined. For example, a difference may be calculated or a ratio between the first coefficient of conversion and the second coefficient of conversion to determine the efficiency degradation rate. The efficiency degradation rate may represent a relative decrease in conversion efficiency. Thus, as explained above, merely based on the relation between energy input and energy output of the energy conversion device, the efficiency degradation rate may be derived for any kind of energy conversion device in a simple and efficient manner, in particular without the need for evaluating device- or environment-specific parameters such as the temperature of the energy conversion device, the ambient temperature or ambient pressure, etc. This provides for a time and resource efficient method that is versatile and easily applicable.

The determined efficiency degradation rate of the energy conversion device can be further used for various technical purposes. For example, it can be used to verify whether it complies with a guaranteed efficiency degradation rate. It can also be used to detect an abnormal sudden decrease of the efficiency, in which case a warning can be raised. It can also be used for purposes of predictive maintenance.

According to an embodiment, step b) comprises applying, as the mathematical model, a linear model to the first measurement data to obtain a linear function modelling the first measurement data, wherein the first coefficient of conversion is the slope of the linear function. As mentioned above, a linear model may be suitable in case of a linear dependence between the energy input values and the energy output values. Such a model may allow for a particularly simple and efficient calculation of the coefficients of conversion and thus for a particularly simple determination of the efficiency degradation rate. In particular, the coefficient of conversion is in this case the simply defined, or given, by the slope of the linear function. That is, at least two linear functions may be provided by the method according to the invention, wherein the second linear function has a different slope, in particular a smaller slope, than the first linear function. The change in slope represents the efficiency degradation rate. Thus, this embodiment provides for a particularly simple and efficient determination of the efficiency degradation rate.

According to a respective embodiment, the linear model utilizes a linear regression calculation based on the formula $y_i = \beta * x_i + \varepsilon_i$, wherein for each observation $i$, $y_i$ represents the energy output, $\beta$ is the regression coefficient, $x_i$ represents the energy input, and $\varepsilon_i$ is an error. That is, the linear model may be a linear regression model. Herein, the slope of a regression line represents the coefficient of conversion. As is known to the skilled person, linear regression is a statistical method that allows to study the relationship between two continuous variables. The goal of linear regression is to find the best-fitting straight line through the measurement data points of the measurement data, wherein the best-fitting line is the one that minimizes the sum of the squared residuals, which is known as the least squares method. Considering the formula $y_i = \beta * x_i + \varepsilon_i$, $y_i$ is the dependent variable, i.e. the energy output, $x_i$ is the independent variable, $\beta$ is the slope of the regression line and represents the rate of change. That is, for each one-unit increase in $x_i$, the expected increase in $y_i$ is by $\beta$ units. The slope, $\beta$ represents the coefficient of conversion. $\varepsilon_i$ is the error term, or residual, denoting the difference between the observed value and the value predicted by the model. It accounts for the randomness or unpredictability in the data that the model cannot capture. Thus, in other words, the coefficient of conversion may be the slope of the regression line that models energy output by energy input and for which the squared sum of the residuals $\varepsilon_i$ is minimized. The slope of the regression line for the second measurement data will be smaller than the slope of the regression line for the first measurement data. In other words, the regression lines will tilt from time point to subsequent time point. This change in the coefficient of conversion represents the efficiency degradation rate. This embodiment provides for a particularly simple and efficient determination of the efficiency degradation rate.

According to an embodiment, step b) comprises applying, as the mathematical model, a non-linear model to the first measurement data to obtain a non-linear function modelling the first measurement data, wherein the first coefficient of conversion is the integral of the non-linear function. The non-linear model may utilize a polynomial regression calculation.

According to an embodiment, the method comprises, before step b), filtering and/or cleansing of the first measurement data. This step may be repeated as well during the repetition step d) meaning that for the second and any subsequent measurement data the filtering and/or cleansing may be performed as well.

The accuracy of the coefficient of conversion computation may be influenced by abnormal data and outliers, necessitating their removal for allowing a precise derivation of the efficiency degradation rate. For example, energy measurements may be inherently susceptible to data holes, outliers, and quality issues, which can be attributed to factors such as short-term operational environment fluctuations, conversion device failures, sensor issues, and communication breakdowns. To address these issues, the measurement data may be cleansed before processing, i.e. before applying the mathematical model and so on, for example by processing the measurement data via any one or more of: removing wrong data types, removing implausible measurement data, removing data exceeding the inter-quartile range, check completeness of the measurement data, check for alignment of timestamps of measurement data, check for consistent unit of measurement data, for cumulative measurement data, remove measurement data that is less than its antecedent. In other words, steps of data cleansing may include one or more of removing observations with incorrect data types or implausible values, eliminating observations that exceed the inter-quartile range of the distribution over the chosen timespan, verifying the dataset's completeness over the selected timespan, checking the alignment of sampling timestamps across all measurements, ensuring unit homogeneity across measurements, and discarding any cumulative data measurement sample that is less than its predecessor. Neglecting these preprocessing steps may compromise calculation accuracy. Further data-cleansing and outlier removal techniques, such as machine learning-based outlier detection, may be performed as they can further enhance the data quality.

Further, for the accurate computation of the coefficient of conversion, it is advantageous that the measurement data selected for analysis is derived from observations made under consistent environmental conditions. The energy output of energy conversion devices, such as a PV system, may not exhibit a perfect linear relationship with the energy input. For instance, the energy produced per unit of solar irradiance in a PV system may not be a constant value across varying input levels. Therefore, to ensure a more reliable determination of the coefficient of conversion and comparison of the coefficient of conversions across different time periods, it may be beneficial to process the measurement data through a filter beforehand. According to a respective embodiment, a filter may be applied to the measurement data, for example a band-pass filter, and/or measurement data with stable environmental conditions may be selected. The band-pass filter may take into account the relationship between energy output and energy input only if it falls within a specified range, such as within $\pm 40\%$, preferably $\pm 30\%$, more preferably $\pm 25\%$ of the declared/nominal efficiency energy conversion device. That is, the band-pass filter may have specific range of $\pm 40\%$, preferably $\pm 30\%$, more preferably $\pm 25\%$. This may provide for a more accurate determination of the efficiency degradation rate.

According to an embodiment, the energy conversion device is any one of a photovoltaic (PV) system, a heat-pump, a wind turbine. The method according to the invention, due to its versatility, may be effectively applied to all these different kinds of energy conversion device resulting in a meaningful determination of the efficiency degradation rate.

According to an embodiment, the energy conversion device comprises a plurality of sub-devices and the efficiency degradation rate is calculated for each of the plurality of sub-devices. For example, the energy conversion device may be a PV system including multiple (interconnected) PV modules as sub-devices. Large energy conversion devices may refer to energy conversion devices comprising more than 50 sub-devices, preferably more than 100 sub-devices, more preferably more than 1000 sub-devices, even more preferably more than 10,000 sub-devices. The method according to the invention is suited not only for a single energy conversion device but also for such energy conversion devices comprising a plurality of sub-devices which may allow for an efficient determination of the efficiency degradation rate of the sub-devices. From the efficiency degradation rate of the sub-devices an efficiency degradation rate of the complete system may be derived.

According to an embodiment, steps a) to c) are repeated for two or more measurement data of the energy conversion device at different time points, obtaining three or more coefficients of conversion. As explained above, more than two measurement data at different time points may be evaluated, coefficients of conversion determined and the efficiency degradation rate derived therefrom. Determining three or more coefficients of conversion may increase the reliability of the obtained efficiency degradation rate of the energy conversion device.

The invention also pertains to a data processing apparatus comprising a processor configured to perform the steps of the method according to the invention, i.e. of the above-explained method. The data processing apparatus may be a computer.

The invention also pertains to a computer program product comprising instructions which, when the program is executed by a data processing apparatus, cause the data processing apparatus to carry out the steps of the method according to the invention, i.e. of the above-explained method. The data processing apparatus may be a computer.

The invention also pertains to a computer-readable storage medium comprising instructions which, when executed by a data processing apparatus, cause the data processing apparatus to carry out the steps of the method according to the invention, i.e. of the above-explained method. The data processing apparatus may be a computer.

Brief Description of Figures

Fig. 1     shows a flowchart illustrating the method-steps of an embodiment of the computer-implemented method according to the present invention.

Fig. 2     illustrates an energy conversion device.

Fig. 3     shows a graph of measurement data including multiple measurement data points each relating an energy input value of the energy conversion device to an energy output value before applying a filter.

Fig. 4     shows a graph of the measurement data of Fig. 3 after applying a filter.

Fig. 5     Illustrates multiple linear functions obtained by fitting a mathematical model to measurement data.

Fig. 6     shows an example of measurement data of a PV module with energy output values in kW and the solar irradiance in $W/m^2$ as energy input values before applying a filter.

Fig. 7     shows the measurement data of Fig. 6 after applying a filter.

Fig. 8     shows a graph of regression lines calculated for measurement data of different time points over 5 years.

Fig. 9     shows the change of the coefficient of conversion, derived from the regression lines of Fig. 8, over 5 years.

Detailed Description

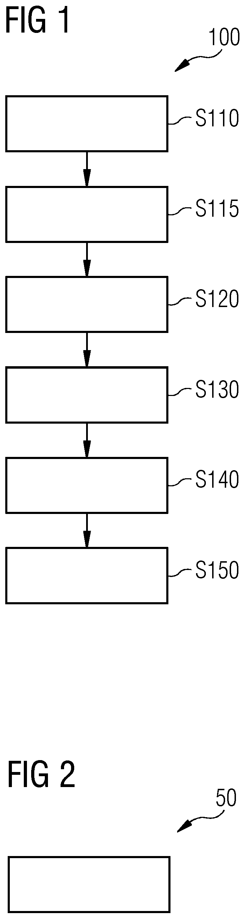

Fig. 1 illustrates the method-steps of the computer-implemented method 100 for calculating an efficiency degradation rate of an energy conversion device 50 (cf. Fig. 2) of the present invention. The energy conversion device 50 according to the present disclosure may, for example, be any one of a photovoltaic system, a heat-pump and a wind turbine. Further, the energy conversion device 50 may comprises a plurality of sub-devices. Accordingly, the efficiency degradation rate may be calculated for each of the plurality of sub-devices. In other words, the present description provides a method 100 to detect and quantify efficiency degradation over time in energy conversion devices.

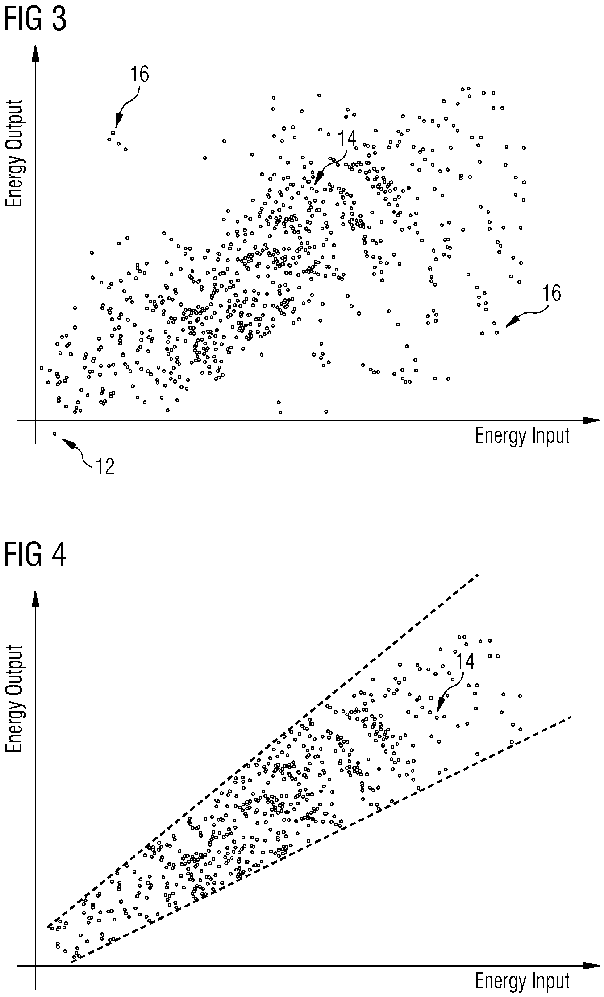

The computer-implemented method 100 is divided into the following steps. Herein, the first step S110 comprises providing first measurement data 14 of a first observation obtained at a first time point, the first measurement data including multiple measurement data points each relating an energy input value of the energy conversion device 50 to an energy output value of the energy conversion device 50. Fig. 3 shows the first measurement data 14.

An intermediate step S115, which may be optional, comprises cleansing and/or filtering of the first measurement data 14. For example, the first measurement data 14 may be filtered through a band-pass filter, where the relation between output and input energy is considered only if it lies in a specific range of choice (e.g., +- 25% of the declared efficiency of the device) as shown in Fig. 4. Thereby, outliers 16 may be filtered.

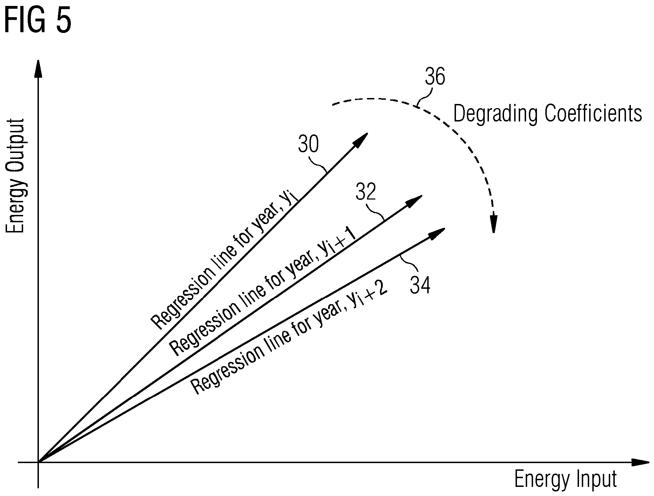

A second step S120 comprises applying a mathematical model to the first measurement data 14 to obtain a function modelling the first measurement data 14. In particular, as the mathematical model, a linear model may be applied to the first measurement data 14 thereby obtaining a linear function modelling the first measurement data 14. Fig. 5 shows such linear functions modelled to different measurement data. Herein, the slope of the linear function represents a first coefficient of conversion. More particularly, the linear model utilizes a linear regression calculation based on the formula $y_i = \beta * x_i + \varepsilon_i$, wherein for each observation $i$, $y_i$ represents the energy output, $\beta$ is the regression coefficient, $x_i$ represents the energy input, and $\varepsilon_i$ is an error. The regression coefficient $\beta$ represents the first coefficient of conversion. That is, the slope of the linear function is determined, step S130, as the first coefficient of conversion which represents a ratio of the energy input to the energy output at the first time.

The above steps are repeated, in step S140, for further measurement data of observations at different time points, for example for second measurement data obtained at a second time point and third measurement data obtained at a third time point, the second time point being later than the first time point and the third time point being later than the second time point. Thus, a first regression line 30 may model or fit the first measurement data 14 representing data of a first year $y_i$, a second regression line 32 may model or fit the second measurement data representing data of a second year $y_{i+1}$, and a third regression line 34 may model or fit the third measurement data representing data of a third year $y_{i+2}$, see Fig. 5. For each of the regression lines 30, 32, 34 the respective coefficient of conversion is determined, i.e. the slope of the regression line.

In a last step S150, the determined coefficients of conversion, i.e. the first coefficient of conversion, the second coefficient of conversion, and the third coefficient of conversion, are compared to derive therefrom the efficiency degradation rate of the energy conversion device 50. As shown in Fig. 5, the slopes of the regression lines 30, 32, 34 get smaller from year to year resulting in a tilt of the regression lines 30, 32, 34. Thus, the coefficient of conversion - a and thus the efficiency - degrades over time as indicated by the dotted arrow, see reference sign 36.

The method allows for a simple an effective method of calculating the efficiency degradation rate of basically any kind of energy conversion device based on simple measurement data including merely energy input values and energy output values.

An example of the method, in particular for a PV module as an energy conversion device, is described in more details below.

In the intermediate step S115, data cleansing and/or data outlier removal may be performed. Fig. 3 exemplarily illustrates a graph of energy output over energy input of samples before applying a filter comprising measurement data 14, the measurement data 14 comprising outlier measurement data 16. Outlier measurement data 16 may be identified by being at a distance from the majority of measurement data 14. Abnormal data 12 and/or outliers 16 may influence the computation of the coefficient of conversion and may be removed for obtaining accurate measurement data. Measurement data, in particular energy measurement data collected in the field, may be prone to data holes, outlier data, and/or quality issues. Such problems may be caused by, for example, short-term variation and/or fluctuation in operational environment, electrical and/or mechanical failure in the energy conversion device 50, issues with measuring sensors inside or outside of the energy measuring device 50, communication failure, etc. Optionally, one or more of the following measures may be taken. For example, measurement data with a different data type (for example, a character when number is expected) may be removed. Further, measurement data with unplausible values (for example, a negative value when a positive value is expected) may be removed. Further, measurement values exceeding the inter-quartile range of the distribution over the selected timespan may be removed. As another measure, the completeness of the measurement data over the selected timespan may be checked. Furthermore, the alignment of the sampling timestamps for all the measurement data may be checked. Additionally, homogeneous units may be assured across measurement data. Further, for cumulative measurement data, any sample that is less than its antecedent sample may be removed. Skipping these preprocessing steps may negatively affect the accuracy of the calculation. Additional data-cleansing and outlier removal techniques may be performed. For example, machine learning based outlier detection may be performed.

Also, in the intermediate step S115, filtering and/or selection of measurement data 14 may be performed. Fig. 4 exemplarily illustrates a graph of energy output over energy input of samples of measurement data 14 after applying a filter to the, optionally cleansed, measurement data. Filtering may refer to a selection of measurement data 14 from homogeneous environmental conditions. Before computation of the coefficient of conversion, the, optionally cleansed, measurement data may be sampled from the measurement data 14 under homogenous environmental conditions. The response of an energy conversion device 50 to input energy may not be linear. For example, in a PV system, the energy generated per unit of solar irradiance may not be constant across different input values. For this reason, the computation and comparison between different time periods is more consistent if the data is funneled through a filter. One example will be explained later regarding the PV system example, that is, filtering according to a "clear-sky" index.

A band-pass filter may be used where the relation between output and input energy is considered only if it lies in a specific range of choice (for example, $\pm40\%$, preferably $\pm30\%$, more preferably $\pm25\%$ of the declared efficiency of the device). Optionally, multiple types of filters may be applied. A larger range filters less data and, therefore, is less likely to produce unrealistic results. A narrower range filters more data and facilitates comparability with other data. For rapidly changing environments, further specific filters may be used. This may avoid errors caused by the sampling time of the measuring devices. An example, again for PV systems, are days with scattered clouds. The solar sensor may record a moment of direct sun exposure, but after few seconds be covered by a cloud. In this case, the observation may be restricted to those with optimal and stable environmental conditions, for example considering only days with a "clear-sky" index above a specific threshold.

In the second and third step S120, S130, the mathematical model is applied and the coefficient of conversion is calculated. The conversion of energy may be expressed using the following formula:

$$f : Energy\ Input \rightarrow Energy\ Output$$

$$Energy\ Input * b = Energy\ Output$$

Here, b is the ratio between energy output and energy input for a specific observation (a specific moment in time) of the energy conversion device 50. As the efficiency of the energy conversion device 50 decreases over time (e.g., from one year to another year or at intervals of two, three or more years), the problem of measuring the efficiency degradation can be considered equivalent to observing the progression of coefficient b for multiple consecutive time spans (e.g., month or years). The coefficient for all samples in a specific time span may be calculated using linear regression. Linear regression may refer to a (simple machine-learning modelling) technique that uses one independent feature to model a dependent feature. Linear regression can be expressed as follows:

$$y_i = \beta_0 + \beta * x_i + \epsilon_i$$

wherein for each observation $i$, $y_i$ is the dependent variable, $\beta_0 =$ is the intercept, $\beta$ is the regression coefficient, $x_i$ is the independent variable, and $\varepsilon_i$ the residual or error.

When forcing the intercept $\beta_0$ to zero, the regression becomes $y_i = \beta * x_i + \varepsilon_i$, where $\beta$ is the coefficient of conversion. Graphically, the coefficient of conversion represents the slope of the regression line that models energy output by energy input and for which the squared sum of the residuals $\varepsilon_i$ is minimized.

As mentioned above, in the fourth step S140, the steps executed for obtaining the first coefficient of conversion are repeated for obtaining at least a second coefficient of conversion. Obtaining more coefficients of conversion increases the reliability of the obtained efficiency degradation rate. Fig. 5 illustrates the energy output over the energy input for the three regression lines 30, 32, 34 of the energy conversion device 50. As mentioned, the graph shows a first regression line 30, for example computed from measured data of a first year, a second regression line 32, for example computed from measured data of a second year subsequent to the first year and a third regression line 34, for example computed from measured data of a third year subsequent to the second year. Due to the degradation of the energy conversion device 50, the regression line of year $y_{i+1}$ 32 is flatter than the regression line of year $y_i$ 30. In other words, for the same energy input, the energy output has lowered. This means that the coefficient of conversion has decreased over time which may be referred to as coefficient degradation 36.

The comparison of the first coefficient of conversion with the second coefficient of conversion for obtaining an efficiency degradation rate of the energy conversion device 50 in step S150 may be performed numerically, by subtracting the first coefficient of conversion $\beta_1$ of the first regression line from the second coefficient of conversion $\beta_2$ of the second regression line, and taking the absolute value of the difference as the efficiency degradation rate of the energy conversion device 50. Alternatively, the step of comparing 150 is based on a graphical comparison of the first function comprising the first coefficient of conversion (first regression line) and a second function comprising the second coefficient of conversion (second regression line).

According to one embodiment, if multiple energy input sources are available, multiple linear regression can be used instead of linear regression. For multiple linear regression, the only change is the increase in dimensionality, thereby forming a regression hyperplane out of a plurality of regression lines for one year. That is, instead of one regression line for one year with linear regression, one regression hyperplane for one year will be obtained by multiple linear regression. As the performance in energy conversion devices 50 degrades over time, the coefficients of conversion degrade as well, which is expected and which results in tilting regression hyperplanes from year-to-year as illustrated in Figure 5.

According to an embodiment, the energy conversion device 50 may be a PV system or PV module. Every energy conversion device 50 has its own characteristics. The computation of the coefficient of conversion does not differ among different energy conversion devices, but the filtering step may be customized by including custom filters. This section describes the process of computing efficiency degradation for a PV system or PV module.

In this embodiment, for filtering, a band-pass filter is used. Further, an Irradiance to Power Ratio (IPR) is used. This metric measures the relationship between the amount of irradiance that reaches the earth's surface and the amount of energy produced at the same time instance.

$$IPR = \frac{\text{Solar Irradiance}}{Power}$$

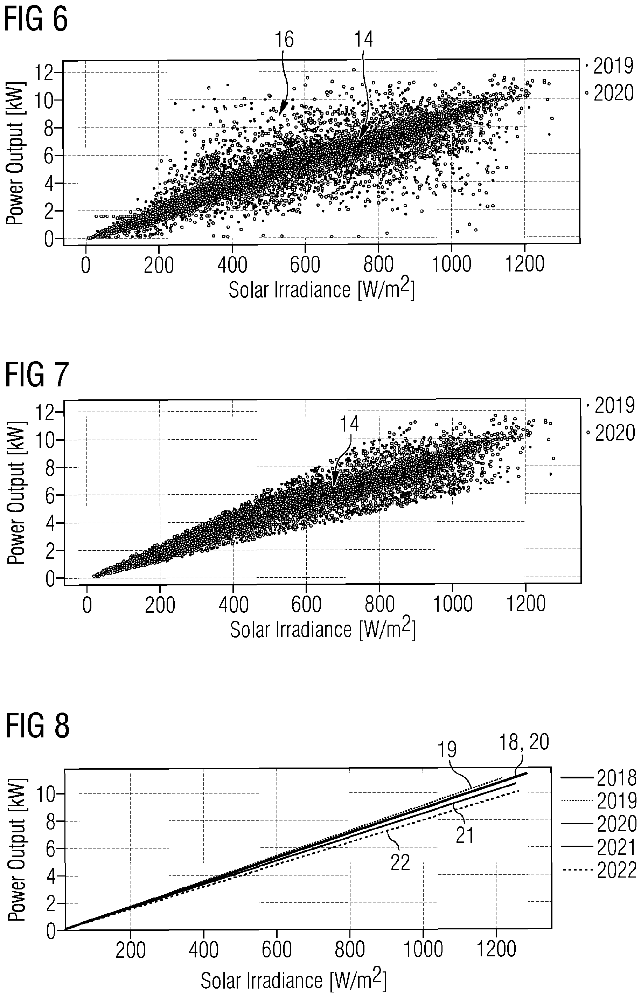

Datapoints sampled in different time periods with similar IPR value would imply that the environmental conditions during these time periods are homogeneous. By defining upper and lower IPR thresholds, samples of the measurement data may be filtered such that only samples from homogeneous environmental conditions remain. Fehler! Verweisquelle konnte nicht gefunden werden.6 shows an example of measurement data 14 which stems from two different years, that is 2019 and 2020, of measurements of an energy conversion device 50 for power output in kW over solar irradiance in W/m$^2$ before applying a filter. Outlier measurement data 16 are still present. Fig. 7 shows filtered measurement data 14 as obtained from the measurement data 14 of Fig. 6 after applying the band-pass filter. It can be seen that the outlier measurement data 16, occurring especially in 2020, is effectively removed.

Additionally or alternatively, a custom filter may be used. One example for a custom filter is the clear-sky index. The clear-sky index may be used for identifying homogeneous environmental condition. It is a ratio between measured irradiance and modeled irradiance for uncloudy and clear sky. Various open-source libraries, such as PVLIB (W. F. Holmgren, C. W. Hansen and M. A. Mikofski, "pvlib python: a python package for modeling solar energy systems." Journal of Open Source Software, vol. 3, p. 884, 2018) are available for modelling the clear sky irradiance. By defining upper and lower clear-sky index thresholds, one can filter the datapoints of two different periods with homogeneous clear sky condition.

In another embodiment, the coefficient of conversion is obtained for a PV system over 5 years. The coefficient of conversion is computed by using the measurement data filtered according to at least one of the methods mentioned above. According to this embodiment, only data points from the summer season are selected. Fig. 8 shows a graph of calculated linear regression lines, indicating the power output in kW and the over solar irradiance in W/m$^2$. Reference sign 18 indicates the regression line of measurement data of 2018, reference sign 19 indicates the regression line of measurement data of 2019, reference sign 20 indicates the regression line of measurement data of 2020, reference sign 21 indicates the regression line of measurement data of 2021 and reference sign 22 indicates the regression line of measurement data of 2022. It can be seen that the slope (tilt) of the regression lines 19 to 22 decreases over time.

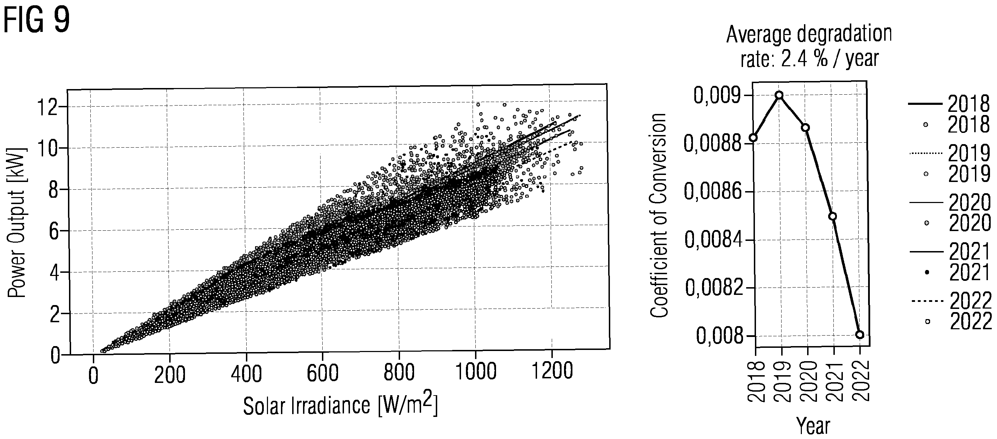

Fig. 9 shows the same graph of calculated regression lines as shown in Fig. 8, however, additionally with corresponding measurement data of various points in time 40 obtained from the energy conversion device 50. The degradation in power output can be seen from the graph and can be quantified by measuring the change of the coefficient over the years, as shown on the right in Figure 9.

Fig. 9 illustrates the change of the coefficient of conversion over 5 years. In the first three years, no efficiency degradation is visible. However, in the fourth year, the coefficient of conversion drops from approximately 0.00885 to 0.00845, that is, about 4.5%. In the fifth year, the coefficient of conversion drops from approximately 0.00845 to 0.008, that is, about 5.3%. Over the whole 5 years, when taking the first year as the baseline, the coefficient of conversion dropped from approximately 0.00885 to 0.008, that is, on average about 2.40% per year. In other words, the efficiency degradation rate of the PC module is about 2.40% per year. Considering the coefficient of conversion drop in 2021 and 2022, it may be assumed that the coefficient of conversion drops another 5% in the next year. Alternatively, the slope of the obtained graph of the coefficient of conversion may be used to estimate the drop in performance of the next year. For example, when only the data from 2018 to 2020 were available, it would be highly likely that the coefficient of conversion will drop by at least the same amount as between 2019 and 2020.

Independent of the grammatical term usage, individuals with male, female or other gender identities are included within the term.

List of Reference

| 12 | abnormal data |
|---|---|
| 14 | (first) measurement data |
| 16 | outlier measurement data |
| 18 | regression line of measurement data of 2018 |
| 19 | regression line of measurement data of 2019 |
| 20 | regression line of measurement data of 2020 |
| 21 | regression line of measurement data of 2021 |
| 22 | regression line of measurement data of 2022 |
| 30 | regression line of year $y_i$ |
| 32 | regression line of year $y_{i+1}$ |
| 34 | regression line of year $y_{i+2}$ |
| 36 | coefficient degradation |
| 40 | measurement data of various points in time |
| 50 | energy conversion device |
| 100 | Computer-implemented method for calculating an efficiency degradation rate |
| S110 | first step of method |
| S115 | intermediate step of method |
| S120 | second step of method |
| S130 | third step of method |
| S140 | fourth step of method |
| S150 | fifth step of method |

**Claims**

1. Computer-implemented method (100) for calculating an efficiency degradation rate of an energy conversion device (50) from measurement data of the energy conversion device (50), the method comprising the steps of:

   a) providing (S110) first measurement data (14) of a first observation obtained at a first time point, the first measurement data including multiple measurement data points each relating an energy input value of the energy conversion device (50) to an energy output value of the energy conversion device (50);
   b) applying (S120) a mathematical model to the first measurement data (14) to obtain a function modelling the first measurement data (14);
   c) determining (S130) a first coefficient of conversion from the obtained function, wherein the first coefficient of conversion represents a ratio of the energy input to the energy output at the first time;
   d) repeating (S140) steps a) to c) with second measurement data of the energy conversion device (50) obtained at a second time point, the second time point being different than the first time point, thereby obtaining a second coefficient of conversion representing a ratio of the energy input to the energy output at the second time point;
   e) comparing (150) the first coefficient of conversion with the second coefficient of conversion to determine the efficiency degradation rate of the energy conversion device (50).

2. The method (100) according to claim 1, wherein step b) comprises:
   applying, as the mathematical model, a linear model to the first measurement data (14) to obtain a linear function modelling the first measurement data (14), wherein the first coefficient of conversion is the slope of the linear function.

3. The method (100) according to claim 2, wherein the linear model utilizes a linear regression calculation based on the formula $y_i = \beta * x_i + \varepsilon_i$, wherein for each observation $i$, $y_i$ represents the energy output, $\beta$ is the regression coefficient, $x_i$ represents the energy input, and $\varepsilon_i$ is an error.

4. The method (100) according to claim 1, wherein step b) comprises:

applying, as the mathematical model, a non-linear model to the first measurement data (14) to obtain a non-linear function modelling the first measurement data (14), wherein the first coefficient of conversion is the integral of the non-linear function.

5. The method (100) according to claim 4, wherein the non-linear model utilizes a polynomial regression calculation.

6. The method (100) according to any one of the preceding claims, wherein the method comprises, before step b):
filtering and/or cleansing of the first measurement data (14).

7. The method (100) according to claim 6, wherein the cleansing comprises:

processing the measurement data (10) via any one or more of: removing wrong data types, removing implausible measurement data, removing data exceeding the inter-quartile range, check completeness of the measurement data, check for alignment of timestamps of measurement data, check for consistent unit of measurement data, for cumulative measurement data, remove measurement data that is less than its antecedent.

8. The method (100) according to claim 6 or 7, wherein the filtering comprises:

applying a filter to the measurement data (10), preferably a band-pass filter, thereby removing measurement data, and/or
selecting measurement data with stable environmental conditions.

9. The method (100) according to any one of the preceding claims, wherein the energy conversion device (50) is any one of a photovoltaic system, a heat-pump, a wind turbine.

10. The method (100) according to any one of the preceding claims, wherein the energy conversion device (50) comprises a plurality of sub-devices and the efficiency degradation rate is calculated for each of the plurality of sub-devices.

11. The method (100) according to any one of the preceding claims, wherein the steps a) to c) are repeated for two or more measurement data of the energy conversion device (50) at different time points, obtaining three or more coefficients of conversion.

12. A data processing apparatus comprising a processor configured to perform the steps of the method (100) of any one of the preceding claims.

13. A computer program product comprising instructions which, when the program is executed by a computer, cause the computer to carry out the steps of the method (100) of any one of claims 1 to 11.

14. A computer-readable storage medium comprising instructions which, when executed by a computer, cause the computer to carry out the steps of the method (100) of any one of claims 1 to 11.

FIG 1

100

S110

S115

S120

S130

S140

S150

FIG 2

50

## FIG 3

## FIG 4

# FIG 5

## FIG 6

## FIG 7

## FIG 8

# FIG 9

**EUROPEAN SEARCH REPORT**

Application Number

EP 24 19 7351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 682 585 B1 (HOFF THOMAS E [US]) 25 March 2014 (2014-03-25) * column 6, paragraph 45 - column 34, paragraph 40; claims 1-6; figures 1,2 * ----- | 1-14 | INV. H02S50/00 |
| X | US 2023/350097 A1 (HOFF THOMAS E [US]) 2 November 2023 (2023-11-02) * paragraphs [0067] - [0310]; claims 1-4; figures 1,2,4,7 * ----- | 1-14 | |

TECHNICAL FIELDS
SEARCHED (IPC)

H02S

The present search report has been drawn up for all claims

| Place of search | Date of completion of the search | Examiner |
|---|---|---|
| The Hague | 10 February 2025 | Boero, Mauro |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

                                                
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 7351

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2025

| Patent document cited in search report | | Publication date | Patent family member(s) | | Publication date |
|---|---|---|---|---|---|
| US 8682585 | B1 | 25-03-2014 | US | 8682585 B1 | 25-03-2014 |
| | | | US | 2014207437 A1 | 24-07-2014 |
| US 2023350097 | A1 | 02-11-2023 | US | 2019285672 A1 | 19-09-2019 |
| | | | US | 2020271705 A1 | 27-08-2020 |
| | | | US | 2021285991 A1 | 16-09-2021 |
| | | | US | 2023350097 A1 | 02-11-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PHINIKARIDES**. Review of photovoltaic degradation rate methodologies. *Renewable and Sustainable Energy Reviews*, 2014, vol. 40, 143-152
- **PIECHURSKI**. Quasi-dynamic model of the energy efficiency degradation coefficient for an air-to-water heat pump. *E3S Web of Conferences*, 2018, vol. 44, 00139

- **W. F. HOLMGREN** ; **C. W. HANSEN** ; **M. A. MIKOFSKI**. pvlib python: a python package for modeling solar energy systems. *Journal of Open Source Software*, 2018, vol. 3, 884